# EUROPEAN PATENT APPLICATION

(11) **EP 2 647 280 A1**
(43) Date of publication of application: **09.10.2013**
(21) Application number: 13161982.7
(22) Date of filing: 02.04.2013
(51) Int. Cl.: A01D 87/12

(54) **Bale lifting device and method for lifting a bale**

(30) Priority: 04.04.2012 FI 20125382
(71) Applicant: Kapdahl OY, 44300 Konnevesi (FI)
(72) Inventor: Salonen, Jarno, 44300 KONNEVESI (FI); Kapanen, Timo, 44350 ISTUNMÄKI (FI)
(74) Representative: Helke, Kimmo Kalervo

(57) **Abstract**

The invention relates to a bale lifting device. The bale lifting device includes a frame structure (10) and tubes (12, 13, 14), which are fitted to the frame structure (10) at a distance (11) from each other. The tubes (12, 13, 14) are essentially parallel to each other, and there are two tubes to each bale. The frame structure (10) is articulated in such a way that the first tube (12) can be lifted above the second tube (13) in order to lift a bale (15). In addition, the frame structure (10) includes an operating element (16) for rotating the frame structure (10). The invention also relates to a method for lifting a bale.

## Description

The present invention relates to a bale lifting device, which includes
- a frame structure, and
- tubes, which are fitted to the frame structure at a distance from each other, and which are essentially parallel to each other, and of which there are two tubes to each bale.

The invention also relates to a method for lifting a bale.

The baling of silage has almost entirely replaced the traditional harvesting method. Silage is baled into large round bales, which are wrapped completely with plastic, generally immediately after baling. The plastic-covered bales are stored on the field or transported for storage closer to the point of use. After wrapping with plastic, each time the bale is handled increases the risk of the plastic being broken and otherwise loosens the bale.

Compressing grabs have been developed for handling bales. However, the use of grabs deforms the bales and grabs are mainly suitable for only short transport distances. A bale lifting device has therefore been developed, onto which even two bales can be picked off the field. The bales rest on the support of two thick tubes, so that there is little compression of the bales. A bale lifting device of this kind is also referred to as a bale fork.

The bales are picked onto the tubes by lowering the tubes onto, or at least close to the ground and pushing the tubes on both sides of the bale. After this, the bale can be lifted off the ground and transported to the desired location. After baling and wrapping, bales are often far apart. In that case, one bale must first be picked up and placed next to another bale, after which the tubes are pushed under both bales. The placing of the bales leads to extra work and increases tearing of the plastic. To facilitate handling, the distance between the tubes can be adjusted, but even this does not reduce the number of work stages. In addition, the adjustment requires long hydraulic cylinders and conductors of a large size.

The invention is intended to create a new type of bale lifting device, with a simpler construction than previously, but with more versatile functionality. In addition, the invention is intended to create a new type of method for lifting a bale, in which there are fewer stages than previously and by means of which bales can be lifted without tearing the plastic wrapping. The characteristic features of the bale lifting device according to the present invention are stated in the accompanying Claim 1. Correspondingly, the characteristic features of the method according to the invention are stated in the accompanying Claim 14. By means of the insight according to the invention, bales can be handled reliably without extra lifting and other placings. Despite the new functionality, the construction of the bale lifting device has been kept simple and rugged. With the aid of the method, working is made more efficient and easy. The number of times the bales are handled is kept to a minimum, which assists in keeping the plastic wrapping unbroken. Properties, which make the handling of bales even more efficient, can also be added to the bale lifting device.

In the following, the invention is described in detail with reference to the accompanying drawings depicting some embodiments of the invention, in which
- Figure 1a: shows a rear view of the bale lifting device according to the invention,
- Figure 1b: shows a top view of the bale lifting device according to the invention,
- Figure 2a: shows a rear view of the first stage of the method according to the invention,
- Figure 2b: shows a rear view of the second stage of the method according to the invention,
- Figure 2c: shows a rear view of the third stage of the method according to the invention,
- Figure 3a: shows a left-hand side view of the first stage of the method according to the invention,
- Figure 3b: shows a right-hand side view of the third stage of the method according to the invention,
- Figure 4a: shows a partial enlargement of the articulation according to the invention,
- Figure 4b: shows a rear view of a second embodiment of the bale lifting device according to the invention,
- Figure 5a: shows a second embodiment of the articulation according to the invention,
- Figure 5b: shows a rear view of a third embodiment of the bale lifting device according to the invention,
- Figure 6a: shows the initial stage of turning a bale to a vertical position,
- Figure 6b: shows the turning of a bale to a vertical position,
- Figure 7: shows a rear view of a fourth embodiment of the bale lifting device according to the invention.

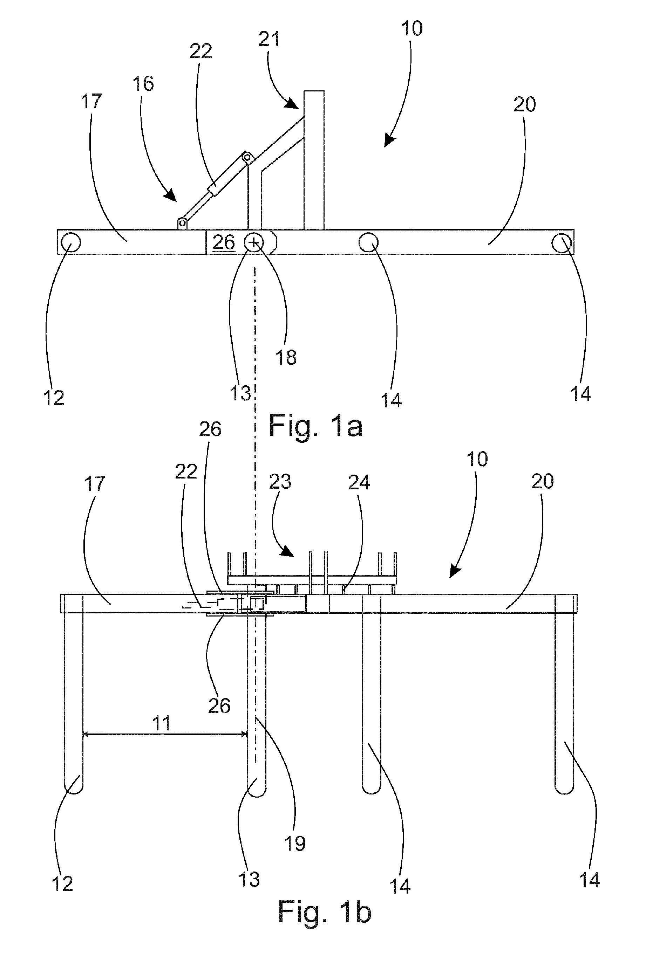

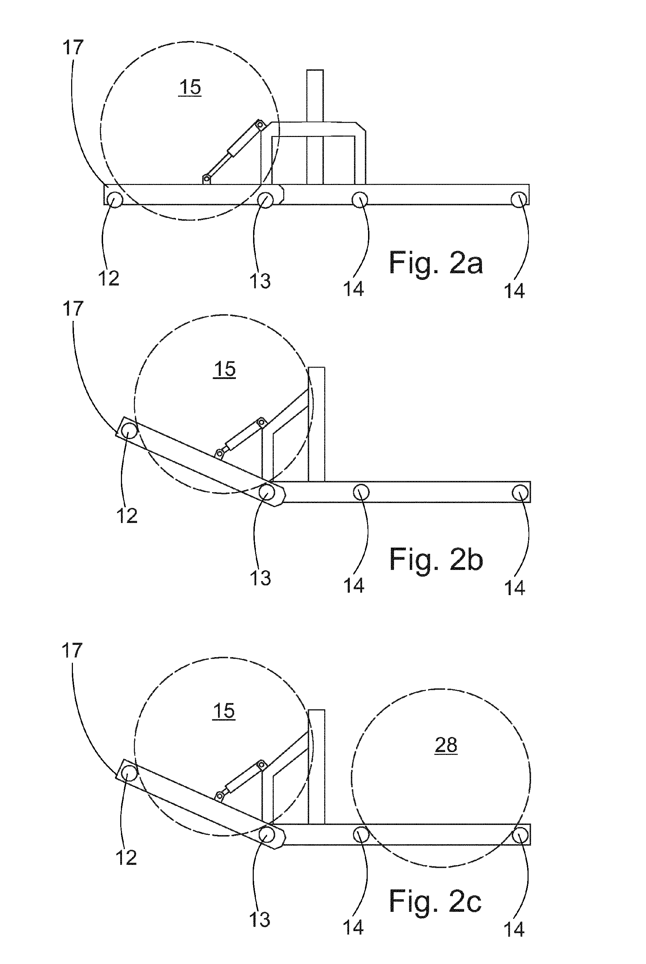

Figures 1a and 1b show the bale lifting device according to the invention, seen from different directions. The bale lifting device includes a frame structure 10, in which essentially parallel tubes 12, 13, and 14, of which there are two tubes to each bale, are fitted at a distance 11 to each other. The problem in the prior art concerns precisely the moving of two bales, so that here the description concentrates on an embodiment that is made for moving two bales. According to the invention, the frame structure 10 is articulated in such a way that the first tube 12 can be raised above the second tube 13, in order to lift a bale 15. In addition, the frame structure 10 includes an operating element 16 for rotating the frame structure 10. In other words, the parts of the frame structure that are pivoted to each other are rotated by means of the operating element. Once the first bale 15 has been raised, a second bale 28 can be picked up onto the rest of the fixed tubes 14, without the first bale 15 coming into contact with the ground (Figure 2c). This also eliminates the shifting of the bales and the bales can be successfully handled with the fewest possible lifts.

According to the invention, the articulation is arranged in such a way that the distance 11 between the tubes 12 and 13 remains unchanged despite the lifting. This avoids abrasion that can break the bale's plastic. During lifting, the bale only rotates and its centre of gravity changes slightly without any greater deformations. In the embodiment described, the unchanged distance is implemented as follows. Here, the first tube 12 is attached to a beam 17, of which the pivot point 18, which is arranged at the opposite end to the tube 12, is essentially located at the centre line 19 of the second tube 13 (Figures 1a and 1b). The distance between the tubes therefore remains unchanged despite the rotation of the beam.

The principle described above can be implemented, for example, using various types of bearings or pivots. In this case, however, the beam 17 is fitted around the second tube 13. The second tube is then functionally a bearing journal, on which the beam is supported and around which the beam rotates. This is an extremely simple, but rugged construction, which takes up only a small space.

In addition to the beam 17, the frame structure 10 includes a main beam 20, to which three fixed tubes 13 and 14 are attached. The moving tube 12 is fixed to the beam 17. All the tubes extend through both walls of the beams, which makes the construction sturdy. The frame structure also includes a vertical support 21, to which is attached a double-acting hydraulic cylinder 22, which acts as the operating element 16. By altering the length of the hydraulic cylinder and the locations of its attachment lugs, the path of motion of the beam can be changed. Thanks to the surprising construction, a sufficient lift is achieved by using a hydraulic cylinder that is clearly shorter than conventional cylinders.

In addition, the frame structure includes a three-point adapter 23, which is attached alongside the main beam 20. The three-point adapter 23 is at a distance from the main beam 20, so that the beam can be rotated easily and the operating device will be easy to situate. Several spacer plates 24 are used for the attachment, but are not present in the case of the beam 17. The construction is, however, sufficiently strong, as the second tube 13 acting as the bearing journal is also welded to the three-point adapter 23.

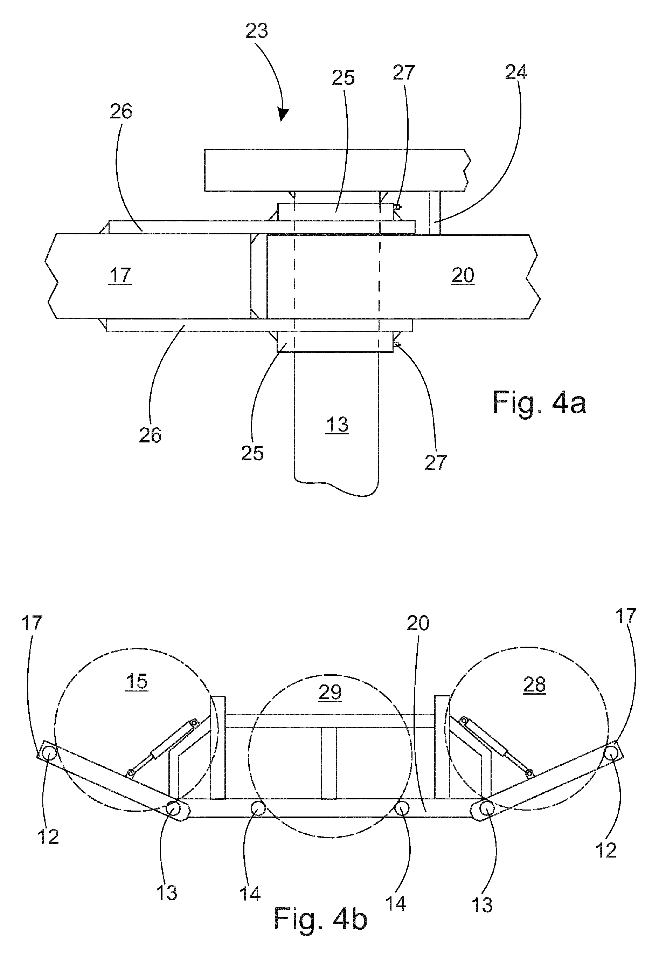

Figure 4a shows the implementation of the articulation according to the invention in greater detail. Here, the pivot point 18 of the beam 17 includes a sleeve 25, the internal diameter of which is greater than the outer diameter of the second tube 13 by the amount of the tolerance used. This creates a simple but rugged journal bearing. The sleeves 25 are attached to the beam 17 using two plate pieces 26. Though two sleeves 25 are used in Figure 4a, it is equally possible to use a single long sleeve. The plate pieces are also supported on the main beam, so that the beam is solidly supported. The journal bearing shown is finally finished with grease, for which purpose there are grease nipples 27 in the sleeves 25. This simple but robust journal bearing will be durable in use, as the angle of rotation of the beam is small. The articulation is preferably arranged in such a way that the angle between the frame structure 10 and the beam 17 is 90 - 180°. In other words, the angle of rotation of the beam will then be a maximum of 90°. In Figure 2b, the said rotation angle is 25°. A larger angle may be required, for example in the embodiment of Figures 4b, in which there are rotating beams at both sides of the bale lifting device. The bale lifting device can then made suitably narrow for road traffic. Two rotating beams can also be fitted to the bale lifting device of Figure 2b, but this is not of great significance in terms of operation. Of course, the operator can then decide on which side to pick up the first bale.

Generally, the first embodiment of the said bale lifting device includes four tubes 12, 13, and 14, of which one is arranged to be lifted. Correspondingly, the second embodiment of the bale lifting device includes six tubes 12, 13, and 14, of which the outermost are arranged to be lifted (Figure 4b). The same reference numbers are used for functionally similar components.

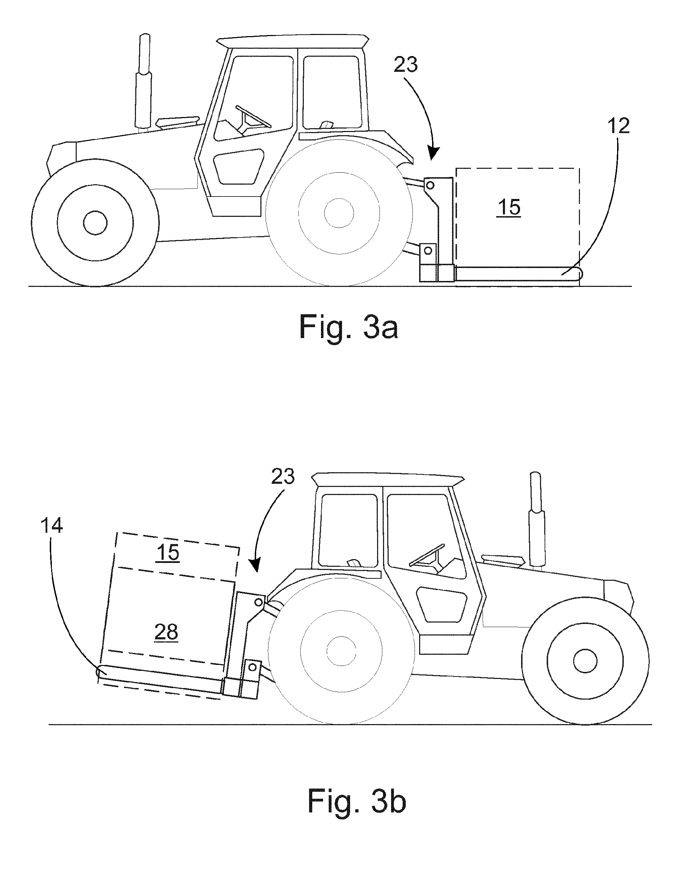

The invention also relates to a method for lifting a bale. In the method, at least two bales 15 and 28 are lifted on essentially parallel tubes 12, 13, and 14. According to the invention, the first bale 15 is picked up and then lifted by raising the first 12 tube higher than the level of the second tube 13, after which the second bale 28 picked up on the third tubes 14. In Figure 2a, the first bale 15 is on the ground and is picked up on the first and second tubes 12 and 13. The same stage is shown in Figure 3a, in which the said tubes are pushed to either side of the bale 15. The bale can be lifted by rotating the beam when the bale lifting device is on the ground or raised off the ground (Figure 2b). In any event, the second bale 28 can be picked up on the third tubes 14 without regard to the first bale 15. Both bales 15 and 28 are lifted off the ground and taken to the desired location (Figure 3b). The bale lifting device according to the invention can be installed on either the front or rear lifting device of a tractor, or even on a front loader. A telehandler or other work machine can also be used. Figure 4b shows a second embodiment of the bale lifting device according to the invention. In this case, a second bale 29 too is lifted, after which a third bale 29 is picked up on third tubes 14. In the second embodiment, the beams 17 are so far from each other that the three-point adapter can be attached to the main beam 20 without spacer plates. This simplifies the construction and manufacture of the bale lifting device.

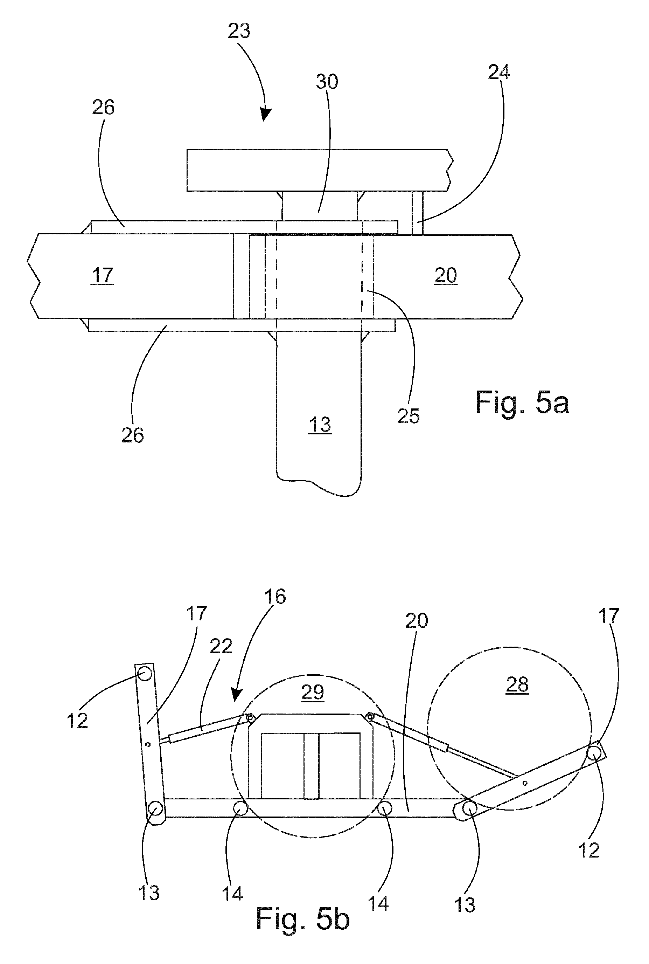

In the embodiment of Figure 4a, the second tube 13 does not rotate, the beam 17 rotating around the second tube 13, the sleeve 25 being attached to the beam 17. In the embodiment of Figure 5a, the sleeve 25 is attached to the main beam 20 and the second tube 13 is attached to the beam 17. The second tube 13 therefore rotates along with the beam 17. The frame structure also includes a bearing journal 30, which extends inside the tube 13, strengthening the pivoting.

Figure 5b shows a variation of the bale lifting device, which is intended for handling three bales. For reasons of clarity, one bale is not shown. The right-hand side beam 17 is in the position in which bales are moved. Correspondingly, the left-hand side beam 17 has been raised to a vertical position, making the empty bale lifting device suitable for moving on public roads. When the beams are raised vertically, the width of the bale lifting device is 2900 mm. Correspondingly, with the beams straight out the width of the bale lifting device is 4660 mm.

Figure 2a shows an alternative manner of placing the tubes. In this case, each tube 12, 13, and 14 is arranged in the frame structure 10 on a lower level than the undersurface of the main beam 20. Therefore it is mainly only the tubes that come into contact with the surface of the field and even sink slightly into the field. This makes it easier to take a bale onto the tubes. In addition, it avoids the main beam coming into contact with the field surface. Possible unevennesses in the surface of the field will then not tilt the frame structure. The undersurface of the tubes is 30 - 40 mm lower than the undersurface of the main beam.

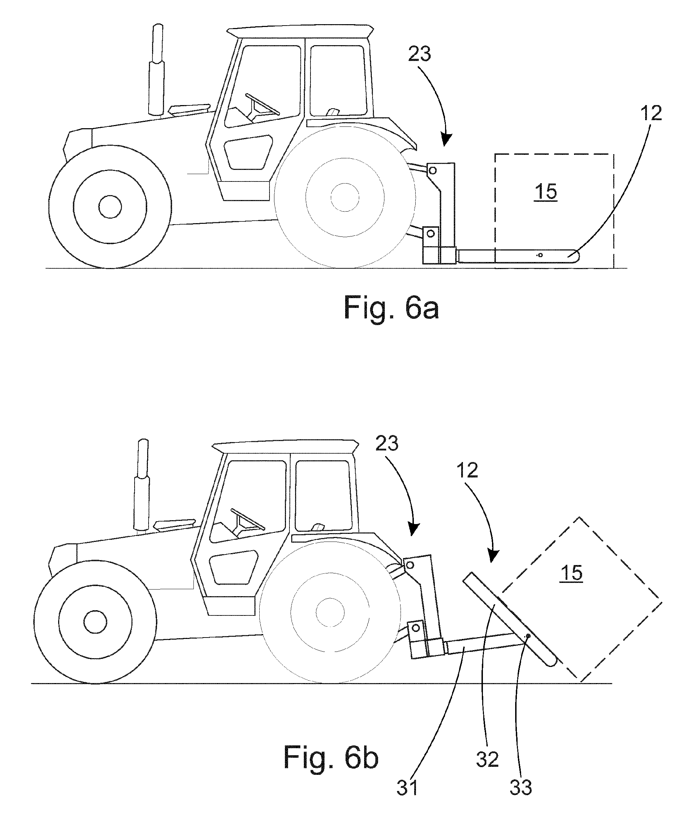

Figures 6a and 6b show a bale being lifted into the vertical position. Here, the tube 12 is formed of a protruding beam 31, to the upper surface of which a channel 32 is pivoted to create a tipping effect. The hinge point 33 is situated one-third of the distance from the end of the tube while two-thirds of the tube is open underneath. The bale is then firmly on top of the tubes when being moved. When it is desired to rotate the bale to a vertical position, the bale is lowered against the ground and the bale lifting device is moved slightly forwards, so that the hinge point is farther from the centre of gravity of the bale. After this, the bale lifting device is raised, when the channels 32 rotate (Figure 6b). During lifting, the bale lifting device can be used to push the bale slightly. As the bale rises to a vertical position, gravity causes the channels to return on top of the protruding beams, after which the bale lifting device is immediately ready for use.

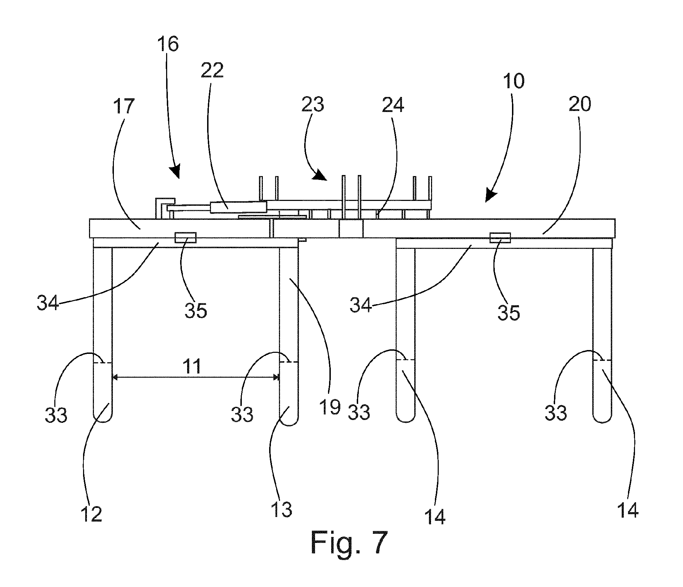

Figure 7 shows a variation of the bale lifting device according to the invention. In it, the first tube 12 and the second tube 13 are attached to each other by means of an intermediate structure 34, as are the third tubes 14. In addition, the tubes are formed of the aforementioned protruding beam and channel. The intermediate structure 34 holds the channels 32 together, thus stabilizing the raising of the bale to a vertical position. Due to this, the solution shown in Figure 5a is used as the pivot, in which the second tube 13 too rotates along with the beam 17. In Figure 7, there are also lugs 35, into which a locking pin or similar can be placed. This will avoid unintended tipping, i.e. the rotation of the channels during transportation. Locking is not essential when moving bales on a field. In addition, in Figure 7, the hydraulic cylinder 22 is located at the side of the frame structure. This achieves a wide angle of rotation of the beam, which is advantageous particularly when using a long hydraulic cylinder, allowing the outermost beams to be raised to a vertical position.

The construction of the bale lifting device according to the invention is simple but rugged. In addition, the functionality according to the invention is achieved with simple components. There is also significant streamlining and acceleration of operation. At the same time, the number of times the bales are handled is reduced to a minimum, so that bales are more likely to remain unbroken. Each bale can be picked up separately without unnecessary positioning. Compared to the prior art, this will eliminate at least one work stage.

The distance between the tubes is about 950 mm, so that the bale lifting device is suitable for handling conventional round bales. The diameter of a round bale is about 1200 - 1300 mm, its mass being about 1000 kilograms. For example, in the embodiment of Figure 2, the first tube 12 rises by about 500 mm. The dimensioning can be altered to adapt the bale lifting device to different types of bale, particularly to plastic-wrapped round bales.

## Claims

1. Bale lifting device, which includes
- a frame structure (10) and
- tubes (12, 13, 14), which are fitted to the frame structure (10) at a distance (11) from each other, and which are essentially parallel to each other, and of which there are two tubes to each bale,
**characterized in that** the frame structure (10) is articulated in such a way that the first tube (12) can be lifted above the second tube (13) in order to lift a bale (15), and the frame structure (10) includes an operating element (16) for rotating the frame structure (10).

2. Bale lifting device according to Claim 1, **characterized in that** the articulation is arranged in such a way that the distance (11) between the first and second tubes (12, 13) remains unaltered despite lifting.

3. Bale lifting device according to Claim 1 or 2, **characterized in that** the first tube (12) is attached to a beam (17), the pivot point (18) of which, arranged at the opposite end to the first tube (12), is essentially at the location of the centre line (19) of the second tube (13).

4. Bale lifting device according to Claim 3, **characterized in that** the beam (17) is fitted around the second tube (13).

5. Bale lifting device according to Claim 4, **characterized in that** the pivot point (18) of the beam (17) includes a sleeve (25), the internal diameter of which is larger than the outer diameter of the second tube (13) by the amount of the tolerance used.

6. Bale lifting device according to Claim 5, **characterized in that** the sleeve (25) is attached to the beam (17).

7. Bale lifting device according to Claim 5, **characterized in that** the sleeve (25) is attached to a main beam (20) belonging to the frame structure (10).

8. Bale lifting device according to any of Claims 3 - 7, **characterized in that** the articulation is arranged in such a way that the angle between the frame structure (10) and the beam (17) is 90 - 180°.

9. Bale lifting device according to any of Claims 1 - 8, **characterized in that** the bale lifting device includes four tubes (12, 13, 14), of which one is arranged to be able to be raised.

10. Bale lifting device according to any of Claims 1 - 8, **characterized in that** the bale lifting device includes six tubes (12, 13, 14), of which the outermost are arranged to be able to be raised.

11. Bale lifting device according to any of Claims 1 - 10, **characterized in that** the tubes (12, 13, 14) are arranged to be lower than the undersurface of a main beam (20) belonging to the frame structure (10).

12. Bale lifting device according to any of Claims 1 - 11, **characterized in that** the first tube (12) and the second tube (13) are attached to each other by means of an intermediate structure (34).

13. Bale lifting device according to any of Claims 1 - 12, **characterized in that** each tube (12, 13, 14) is formed of a protruding beam (31), to the upper surface of which a channel (32) is pivoted in order to create a tipping effect.

14. Method for lifting a bale, in which method at least two bales (15, 28) are lifted on essentially parallel tubes (12, 13, 14), **characterized in that** after picking up the first bale (15), the bale (15) in question is raised above the level of the second tube (13) by lifting the first tube (12), after which the second bale (28) is picked up on the third tubes (14).

15. Method according to Claim 14, **characterized in that** the second bale (28) too is raised, after which a third bale (29) is picked up on the third tubes (14).
